# DEMANDE DE BREVET EUROPEEN

(11) **EP 3 438 949 A1**
(43) Date de publication de la demande: **06.02.2019**
(21) Numéro de dépôt: 18182454.1
(22) Date de dépôt: 09.07.2018
(51) Int. Cl.: G08G 5/00, G08G 5/04

(54) **PROCÉDÉ ET DISPOSITIF DE CONTRÔLE DE LA TRAJECTOIRE D'UN AÉRONEF SUIVEUR PAR RAPPORT À UN AÉRONEF MENEUR LORS D'UN RISQUE DE COLLISION**

(30) Priorité: 03.08.2017 FR 1757452
(71) Demandeur: Airbus Operations S.A.S., 31060 Toulouse (FR)
(72) Inventeur: LEBAS, Julie, 31200 TOULOUSE (FR); ROBIN, Jean-Luc, 31240 SAINT-JEAN (FR); TORRALBA, José, 31330 MERVILLE (FR)
(74) Mandataire: Gicquel, Olivier Yves Gérard

(57) **Abrégé**

- Procédé et dispositif de contrôle de la trajectoire d'un aéronef suiveur par rapport à un aéronef meneur lors d'un risque de collision.
- Le dispositif (1) de contrôle de la trajectoire d'un aéronef suiveur (AC2) par rapport à un aéronef meneur (AC1), ces aéronefs (AC1, AC2) volant en formation (F), comporte une unité de réception de données configurée pour recevoir une information de risque de collision concernant l'aéronef meneur (AC1), une unité de calcul configurée pour déterminer au moins une position dite de sécurité (PS) lors de la réception d'une information de risque de collision, ladite position de sécurité (PS) correspondant à une position, dans laquelle l'aéronef suiveur (AC2) n'est pas soumis à des effets de vortex (V1, V2) générés par l'aéronef meneur (AC1), et une unité de contrôle configurée pour amener l'aéronef suiveur (AC2) dans ladite position de sécurité (PS), dès que l'unité de calcul a déterminé ladite position de sécurité (PS).

## Description

La présente invention concerne un procédé et un dispositif de contrôle de la trajectoire d'un aéronef, dit aéronef suiveur, par rapport à un aéronef dit aéronef meneur qui le précède, en particulier lors d'un risque de collision, lesdits aéronefs meneur et suiveur réalisant un vol en formation.

### ÉTAT DE LA TECHNIQUE

Un vol en formation comprend au moins deux aéronefs, notamment des avions de transport, à savoir un aéronef meneur (ou leader), et un ou plusieurs aéronefs suiveurs. Les aéronefs suiveurs volent en suivant l'aéronef qu'ils suivent directement (à savoir l'aéronef meneur ou un autre aéronef suiveur) de manière à maintenir un espacement constant entre eux. Dans une application particulière, notamment en vol de croisière, les aéronefs volent les uns derrière les autres au même niveau de vol, avec le même cap et la même vitesse. On peut également prévoir d'appliquer aux aéronefs suiveurs des ordres de commande de vitesse qui sont tels qu'ils permettent auxdits aéronefs suiveurs d'avoir la même position, la même vitesse, et la même accélération qu'avait l'aéronef meneur, à des durées antérieures données.

Par ailleurs, les aéronefs, notamment les avions de ligne, sont équipés de systèmes anticollision de type TCAS (pour « Traffic Collision Avoidance Systems », en anglais) qui permettent d'assurer la sécurité du trafic aérien, en prévenant les risques de collision en vol.

Ainsi, lorsque le système anticollision de l'aéronef meneur détecte un risque de collision avec un aéronef de l'environnement externe à la formation ou avec l'aéronef suiveur qui le suit dans la formation, généralement, il émet une alerte et il met en oeuvre une manoeuvre d'évitement afin de sortir de la situation de possibilité (ou risque) de collision. Une telle manoeuvre d'évitement consiste, en général, à réaliser une séparation verticale entre les aéronefs concernés, généralement de 700 pieds pour des avions de ligne.

Or, une telle manoeuvre d'évitement qui génère une modification d'altitude d'au moins l'un des aéronefs de la formation peut entraîner une obligation pour un aéronef suiveur de traverser une turbulence de sillage (ou vortex) crée en aval de l'aéronef meneur qui le précède.

Cette traversée potentielle d'une turbulence de sillage peut créer des perturbations au niveau de l'aéronef suiveur, qui peuvent générer des effets négatifs dans la cabine de ce dernier.

Une telle gestion usuelle d'une manoeuvre d'évitement pour un vol en formation, lors d'un risque de collision, n'est donc pas satisfaisante.

### EXPOSÉ DE L'INVENTION

La présente invention a pour objet de remédier à cet inconvénient. Elle concerne un procédé de contrôle de la trajectoire d'un aéronef tel que revendiqué dans la revendication 1.

Grâce à l'invention, dès qu'une information de risque de collision pour l'aéronef meneur est émise, et qu'une manoeuvre d'évitement usuelle est en principe mise en oeuvre par ce dernier, on est en mesure d'amener l'aéronef suiveur dans une position de sécurité (dépourvue de vortex) avant que le déplacement des vortex, potentiellement dangereux, générés par la manoeuvre d'évitement de l'aéronef meneur, ne produise d'effets au niveau de l'aéronef suiveur.

Dans le cadre de la présente invention, le risque de collision pour l'aéronef meneur peut concerner un risque de collision avec l'aéronef suiveur ou bien avec un autre aéronef de l'environnement, externe (ou non) à la formation.

### BRÈVE DESCRIPTION DES FIGURES

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels :
- la figure 1 est le schéma synoptique d'un premier mode de réalisation d'un dispositif de contrôle conforme à l'invention ;
- la figure 2 est le schéma synoptique d'un deuxième mode de réalisation d'un dispositif de contrôle conforme à l'invention ;
- la figure 3 est une représentation schématique d'un vol en formation montrant un aéronef meneur générant des vortex et deux positions possibles pour un aéronef suiveur par rapport à ces vortex ; et
- la figure 4 illustre schématiquement un procédé de contrôle de la trajectoire de l'aéronef suiveur, mise en oeuvre par un dispositif de contrôle.

### DESCRIPTION DÉTAILLÉE

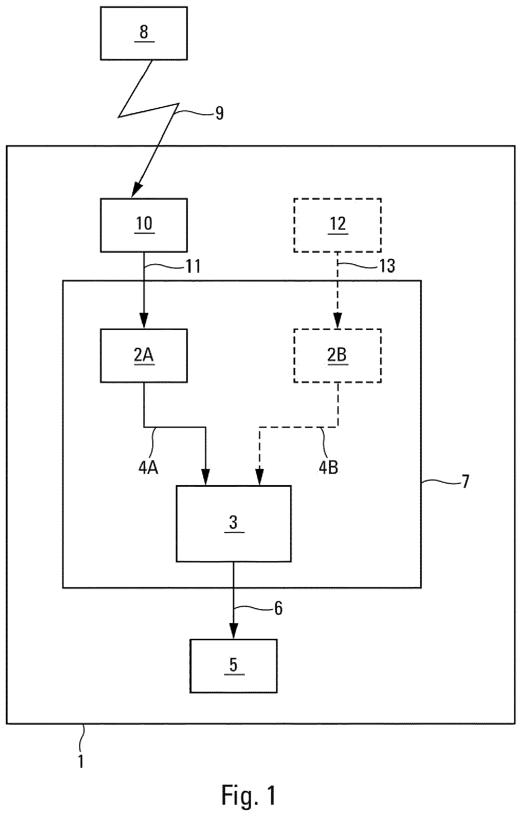

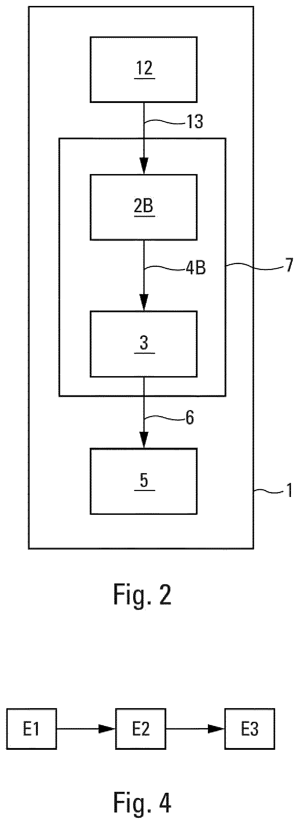

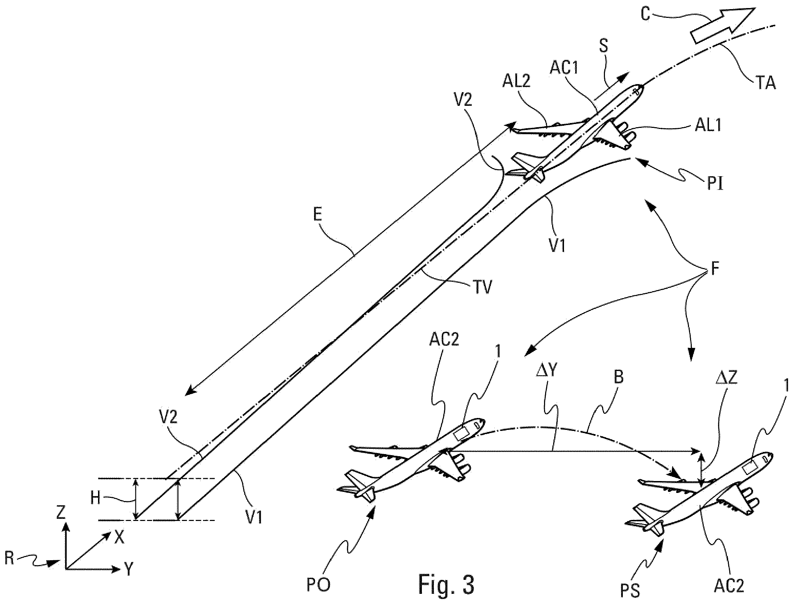

Le dispositif 1 permettant d'illustrer l'invention et représenté de façon schématique sur les figures 1 et 2 dans deux modes de réalisation différents, est un dispositif de contrôle de la trajectoire d'un aéronef suiveur AC2, par rapport à un aéronef meneur AC1 qui le précède, comme illustré sur la figure 3. Lesdits aéronefs meneur et suiveur, par exemple deux avions de transport, réalisent un vol en formation F. Le dispositif 1 est monté sur l'aéronef suiveur AC2, comme représenté très schématiquement sur la figure 3.

De façon usuelle, la formation F comprend l'aéronef meneur AC1 et un ou plusieurs aéronef(s) suiveur(s), à savoir un seul aéronef suiveur AC2 sur l'exemple de la figure 3, qui suivent l'aéronef meneur AC1 (situé à une position PI) de manière à maintenir un espacement longitudinal E constant entre eux. Dans une application particulière, en particulier en vol de croisière, les aéronefs AC1 et AC2 volent l'un derrière l'autre au même niveau de vol, avec le même cap et la même vitesse.

En outre, dans un mode de mise en oeuvre préféré, l'aéronef suiveur AC2 est légèrement décalé latéralement par rapport à la trajectoire TV suivie par l'aéronef meneur AC1, et il se trouve dans une position dite optimale PO pour bénéficier des effets de vortex V1, V2 générés par l'aéronef meneur AC1, comme précisé ci-dessous.

Pour faciliter la description, la figure 3 montre un repère R orthonormé, formé de trois axes (ou directions) X, Y et Z orthogonaux entre eux, qui sont tels que :
- X est l'axe longitudinal du fuselage de l'aéronef meneur AC1 orienté positivement dans le sens d'avancement S de l'aéronef meneur AC1 ;
- Z est un axe vertical qui forme avec l'axe X un plan correspondant au plan vertical de symétrie de l'aéronef meneur AC1 ; et
- Y est un axe latéral qui est orthogonal auxdits axes X et Z.

Dans un mode de réalisation particulier, le dispositif 1 fait partie d'une unité (non représentée spécifiquement) de gestion du vol en formation, qui est embarquée sur l'aéronef suiveur AC2. Une telle unité est configurée pour gérer le vol en formation au moins pour l'aéronef suiveur AC2.

Selon l'invention, le dispositif 1 comporte, comme représenté sur les figures 1 et 2 :
- une unité de réception de données 2A, 2B configurée pour recevoir une information de risque de collision, précisée ci-dessous, concernant l'aéronef meneur AC1 ;
- une unité de calcul 3 configurée pour déterminer au moins une position dite de sécurité PS, dès la réception (via une liaison 4A, 4B) d'une information de risque de collision. La position de sécurité PS correspond à une position, dans laquelle l'aéronef suiveur AC2 n'est pas soumis à des effets des vortex V1, V2 générés par l'aéronef meneur AC1, comme représenté sur la figure 3 et précisé ci-dessous ; et
- une unité de contrôle 5 configurée pour amener (et maintenir) l'aéronef suiveur AC2 dans ladite position de sécurité PS, dès qu'une information de risque de collision est reçue et que la position de sécurité PS a été calculée par l'unité de calcul 3 (et transmise par l'intermédiaire d'une liaison 6 à l'unité de contrôle 5).

Dans un mode de réalisation particulier, l'unité de réception 2A, 2B et l'unité de calcul 3 sont intégrées dans une seule et même unité centrale de traitement 7.

Par ailleurs, l'unité de contrôle 5 comprend tous les moyens usuels nécessaires pour réaliser un pilotage, manuel ou automatique, de l'aéronef suiveur AC2. Cette unité de contrôle 5 n'est pas décrite davantage dans la description suivante.

Ainsi, le dispositif 1 permet, dès qu'une information de risque de collision (précisée ci-dessous) pour l'aéronef meneur AC1 est émise, et notamment qu'une manoeuvre d'évitement est mise en oeuvre de façon usuelle par ce dernier, d'amener l'aéronef suiveur AC2 dans une position de sécurité PS (dépourvue de vortex) avant que le déplacement des vortex, potentiellement dangereux, générés par la manoeuvre d'évitement de l'aéronef meneur AC1, ne produise d'effets (généralement quelques secondes plus tard) au niveau dudit aéronef suiveur AC2.

Le dispositif 1 permet ainsi d'anticiper une manoeuvre d'évitement de l'aéronef meneur AC1 pour amener l'aéronef suiveur AC2, par une commande et un déplacement anticipés de ce dernier, à l'extérieur de la zone des vortex avant que l'effet des vortex générés par la manoeuvre d'évitement n'atteigne la position longitudinale (selon l'axe longitudinal X) de l'aéronef suiveur AC2.

Dans un premier mode de réalisation (représenté en trait continu sur la figure 1), l'unité de réception de données 2A est configurée pour recevoir une information de risque de collision générée par un système anticollision 8 de l'aéronef meneur AC1.

Dans ce premier mode de réalisation, le risque de collision (pris en compte par le dispositif 1) qui est relatif à l'aéronef meneur AC1 peut concerner un risque de collision de l'aéronef meneur AC1 avec l'aéronef suiveur AC2 ou bien un risque de collision de l'aéronef meneur AC1 avec un autre aéronef (non représenté) de l'environnement de l'aéronef meneur AC1, qui est externe (ou non) à la formation F.

De préférence, ledit système anticollision 8 est de type TCAS (pour « Traffic Collision Avoidance System », en anglais). Ce système anticollision 8 permet de façon usuelle, d'assurer la sécurité du trafic aérien en prévenant les risques de collision en vol. Ainsi, lorsque deux aéronefs convergent l'un vers l'autre, le système anticollision monté sur l'un de ses aéronefs calcule une estimation du temps de collision et émet une alerte informant l'équipage d'une possible future collision : une telle alerte est généralement appelée « avis de trafic » ou « alerte TA ». Le cas échéant, le système anticollision émet de plus, à l'attention de l'équipage, un ordre de manoeuvre d'évitement dans le plan vertical (par exemple via une unité d'affichage) afin de sortir de la situation de possibilité de collision : un tel ordre de manoeuvre d'évitement est généralement appelé « avis de résolution » ou « alerte RA ». Les alertes TA et RA sont généralement matérialisées par des messages vocaux (via l'unité d'alerte) et par l'affichage d'informations (via une unité d'affichage) dans la cabine de pilotage. En pratique, le système anticollision embarqué calcule, généralement, un temps de collision dans le plan horizontal (rapport entre la distance horizontale des deux aéronefs et leur vitesse horizontale relative) et un temps de collision dans le plan vertical (rapport entre la distance verticale des deux aéronefs et leur vitesse verticale relative). Les temps de collision ainsi calculés sont comparés à des seuils prédéterminés pour les alertes TA et pour les alertes RA (lesdits seuils prédéterminés étant par ailleurs fonction de l'altitude), et lesdites alertes sont déclenchées lorsque les temps de collision calculés sont inférieurs aux seuils prédéterminés correspondants.

Le système anticollision 8 de l'aéronef meneur AC1 émet des informations vers l'extérieur, sous forme d'ondes électromagnétiques (comme illustré par une flèche 9 sur la figure 1), qui sont susceptibles d'être détectées par un moyen de réception approprié, tel qu'un transpondeur 10, qui est monté sur l'aéronef suiveur AC2.

Le transpondeur 10 qui fait partie du dispositif 1 transmet les informations reçues du système anticollision 8 à l'unité de réception de données 2A via une liaison 11.

Ainsi, dans ce premier mode de réalisation, même en cas de défaillance du système anticollision de l'aéronef suiveur, ce dernier est prévenu du risque de collision, par l'information reçue de l'aéronef meneur AC1. Par conséquent, en plus de permettre d'amener l'aéronef suiveur AC2 dans la position de sécurité PS, on est en mesure, avec ce premier mode de réalisation, de détecter une défaillance du système anticollision de l'aéronef suiveur AC2.

En outre, dans un deuxième mode de réalisation (représenté sur la figure 2), l'unité de réception de données 2B est configurée pour recevoir (via une liaison 13) une information de risque de collision, générée par un système anticollision 12 de l'aéronef suiveur AC2. Ce système anticollision 12 est, de préférence, semblable au système anticollision 8, tel que décrit ci-dessus, de l'aéronef meneur AC1.

Dans ce deuxième mode de réalisation, le dispositif 1 prend uniquement en compte le risque de collision détecté sur l'aéronef suiveur AC2, entre l'aéronef suiveur AC2 et l'aéronef meneur AC1.

Par ailleurs, dans un troisième mode de réalisation préféré, tel qu'illustré sur la figure 1 (comprenant à la fois les éléments représentés en trait continu et ceux représentés en tirets), le dispositif 1 comporte l'ensemble des éléments des premier et deuxième modes de réalisation précités.

Dans ce troisième mode de réalisation, le dispositif 1 peut, pour contrôler la trajectoire de l'aéronef suiveur AC2, prendre en compte, à la fois, les informations de risque de collision émises par le système anticollision 8 de l'aéronef meneur AC1 et celles émises par le système anticollision 12 de l'aéronef suiveur AC2.

Dans le cadre de la présente invention, l'information de risque de collision correspond, de préférence, à un ordre de manoeuvre d'évitement de type « avis de résolution » ou « alerte RA ». Toutefois, il peut également s'agir :
- d'une alerte de type « avis de trafic » ou « alerte TA » ; ou
- de toute information prévenant d'un risque de collision et/ou d'une manoeuvre d'évitement.

Par ailleurs, dans un mode de réalisation particulier, l'unité de calcul 3 est configurée pour déterminer comme position de sécurité PS, une position qui est écartée au moins latéralement (selon l'axe Y) d'une distance Δ*Y* par rapport à la positon PO courante. Le but est d'écarter l'aéronef suiveur AC2 d'une trajectoire anticipée TA de l'aéronef meneur AC1, qui sera suivie par ce dernier lors d'un manoeuvre d'évitement illustrée par une flèche C sur la figure 3. De préférence, la position de sécurité PS est une position qui est également écartée verticalement (selon l'axe Z) d'une distance Δ*Z* par rapport à la position PO courante, comme montré sur la figure 3.

La position de sécurité PS est suffisamment éloignée latéralement de la trajectoire de vol TA et des vortex V1 et V2 (typiquement d'au moins 200 mètres) pour que l'aéronef suiveur AC2 ne ressente aucun effet du vortex V1 le plus proche. Pour définir cette position de sécurité PS, on peut utiliser des données ADS-B, des données mesurées, ..., qui alimentent un modèle de transport de vortex. Le modèle de transport du vortex dépend (de façon usuelle) de caractéristiques de l'aéronef meneur AC1 (masse, envergure, ...) et de caractéristiques du point de vol (vitesse de l'aéronef suiveur AC2, vent, ...). Le positionnement de la position de sécurité PS est directement dépendant de la précision du modèle et de ses données d'entrée.

Dans la position de sécurité PS, l'aéronef suiveur AC2 peut rester ou non en vol en formation (et donc être responsable de sa séparation vis-à-vis de l'aéronef meneur AC1), selon le mode de réalisation envisagé.

Ainsi, dans un premier mode de réalisation, l'unité de contrôle 5 est configurée pour, en amenant l'aéronef suiveur AC2 dans la position de sécurité PS lors de la détection d'un risque de collision, maintenir le vol en formation entre l'aéronef suiveur AC2 et l'aéronef meneur AC1 lors de cette manoeuvre de l'aéronef suiveur AC2.

Ledit dispositif 1 permet ainsi à l'aéronef suiveur AC2, sur lequel il est monté, de conserver toujours les avantages, notamment en termes de coût, du vol en formation.

En outre, dans un second mode de réalisation, l'unité de contrôle 5 est configurée pour, en amenant l'aéronef suiveur AC2 dans la position de sécurité PS, rompre le vol en formation entre l'aéronef suiveur AC2 et l'aéronef meneur AC1 lors de cette manoeuvre de l'aéronef suiveur AC2.

Par ailleurs, dans un mode de mise en oeuvre préféré (qui peut être appliqué adapté à chacun des modes de réalisation précités), le dispositif 1 est configuré pour, lors du vol en formation, antérieurement à la réception d'une information de risque de collision et tant qu'aucune information de risque de collision n'a été reçue, amener (si nécessaire) et maintenir l'aéronef suiveur AC2 dans une position dite optimale PO, à l'aide notamment de l'unité de contrôle 5. Dans cette position optimale PO, l'aéronef suiveur AC2 volant en formation F bénéficie d'effets d'au moins l'un V1 des vortex V1, V2 générés par l'aéronef meneur AC1.

Cette position optimale PO est déterminée, de façon usuelle, par un élément de détermination de position (non représenté) de l'unité centrale de traitement 7.

Dans ce cas, comme représenté sur la figure 3, l'aéronef meneur AC1 suit une trajectoire de vol TV, et il génère dans son sillage, principalement, deux vortex V1 et V2, à savoir un vortex V1 et V2 partant de chacune de ses ailes AL1 et AL2 du fait de la différence de pression entre l'intrados et l'extrados de chaque aile, et de la déflexion de l'écoulement d'air vers le bas qui en résulte. Ces vortex V1 et V2 sont des tourbillons contrarotatifs et sont caractérisés par un champ de vent globalement ascendant à l'extérieur des tourbillons et globalement descendant entre les tourbillons. A partir des ailes AL1 et AL2, les vortex V1 et V2 tendent d'abord à se rapprocher l'un de l'autre, puis à maintenir une distance plus ou moins constante entre eux tout en perdant de l'altitude par rapport à l'altitude à laquelle ils ont été générés, comme montré sur la figure 3 par une double flèche H. Du fait de cette configuration des vortex, il est intéressant, pour l'aéronef suiveur AC2 qui suit l'aéronef meneur AC1 générant les vortex, de pouvoir profiter des vents ascendants afin de réduire sa consommation de carburant, et donc d'amener l'aéronef suiveur AC2 dans la position optimale PO.

Cette position optimale PO est telle que :
- l'aéronef suiveur AC2 est pilotable ;
- elle ne perturbe pas les systèmes, la structure et les moteurs de l'aéronef suiveur AC2 ;
- elle ne génère pas un inconfort pour les passagers de l'aéronef suiveur AC2 ; et
- elle apporte des bénéfices, notamment en termes de consommation de carburant, pour l'aéronef suiveur AC2.

Ledit dispositif 1, tel que décrit ci-dessus, qui est embarqué sur l'aéronef suiveur AC2 (figure 3), met en oeuvre en cas de risque de collision, lors d'un vol en formation F, la suite d'étapes suivantes, comprenant, comme représenté sur la figure 4 :
- une étape de réception E1 mise en oeuvre par l'unité de réception de données 2A ou l'unité de réception de données 2B, consistant à recevoir une information de risque de collision concernant l'aéronef meneur AC1 qui est générée, soit par le système anticollision 8 de l'aéronef meneur AC1, soit par le système anticollision 12 de l'aéronef suiveur AC2 ;
- une étape de calcul E2 mise en oeuvre par l'unité de calcul 3, consistant à déterminer une position de sécurité PS lors de la réception d'une telle information de risque de collision, ladite position de sécurité PS correspondant à une position, dans laquelle l'aéronef suiveur AC2 n'est pas soumis à des effets de vortex V1, V2 générés par l'aéronef meneur AC1 lors d'une manoeuvre d'évitement ; et
- une étape de contrôle E3 mise en oeuvre par l'unité contrôle 5, consistant à amener et à maintenir l'aéronef suiveur AC2 dans ladite position de sécurité PS, dès que cette position de sécurité PS est déterminée.

Par conséquent, lors du vol en formation, l'aéronef suiveur AC2 est maintenu dans une position appropriée par rapport à l'aéronef meneur AC1, et de préférence dans ladite position optimale PO où il bénéficie à la fois du vol en formation et des effets positifs du vortex V1.

Quand un risque de collision est détecté par le système anticollision 8 de l'aéronef meneur AC1, l'aéronef meneur AC1 engage la manoeuvre d'évitement et l'aéronef suiveur AC2 est amené rapidement à l'aide de l'unité de contrôle 5 dans la position de sécurité PS (déterminée par l'unité de calcul 3), comme illustré par une flèche B sur la figure 3, avec une rupture ou non du vol en formation en fonction du mode de réalisation envisagé.

Il en est de même si le risque de collision est détecté par le système anticollision 12 de l'aéronef suiveur AC2.

De plus, si le risque de collision existe avec l'aéronef suiveur AC2, et si le système anticollision 12 de l'aéronef suiveur AC2 n'a pas détecté ce risque, le dispositif 1 permet de détecter une incohérence entre les deux systèmes anticollision 8 et 12, et le cas échéant un dysfonctionnement du système anticollision 12 de l'aéronef suiveur AC2.

## Revendications

1. Procédé de contrôle de la trajectoire d'un aéronef, dit aéronef suiveur (AC2), par rapport à un aéronef dit aéronef meneur (AC1) qui le précède, en cas de risque de collision, lesdits aéronefs meneur et suiveur (AC1, AC2) réalisant un vol en formation (F), ledit procédé comprenant une suite d'étapes, mise en oeuvre sur l'aéronef suiveur (AC2) et comprenant au moins :
- une étape de réception (E1) mise en oeuvre par une unité de réception de données (2A, 2B) et consistant à recevoir au moins une information de risque de collision concernant l'aéronef meneur (AC1) ;
- une étape de calcul (E2) mise en oeuvre par une unité de calcul (3) et consistant à déterminer au moins une position dite de sécurité lors de la réception d'une information de risque de collision, ladite position de sécurité (PS) correspondant à une position, dans laquelle l'aéronef suiveur (AC2) n'est pas soumis à des effets de vortex (V1, V2) générés par l'aéronef meneur (AC1); et
- une étape de contrôle (E3) mise en oeuvre par une unité contrôle (5) et consistant à amener l'aéronef suiveur (AC2) dans ladite position de sécurité (PS), dès que ladite position de sécurité (PS) est déterminée, **caractérisé en ce que** l'étape de contrôle (E3) consiste antérieurement à la réception d'une information de risque de collision, à maintenir l'aéronef suiveur (AC2) dans une position dite optimale (PO), dans laquelle ledit aéronef suiveur (AC2) volant en formation (F) bénéficie d'effets d'au moins l'un (V1) des vortex (V1, V2) générés par l'aéronef meneur (AC1).

2. Procédé selon la revendication 1,
**caractérisé en ce que** l'étape de réception (E1) consiste à recevoir une information de risque de collision issue d'un système anticollision (8) de l'aéronef meneur (AC1).

3. Procédé selon l'une des revendications 1 et 2,
**caractérisé en ce que** l'étape de réception (E1) consiste à recevoir une information de risque de collision issue d'un système anticollision (12) de l'aéronef suiveur (AC2).

4. Procédé selon l'une quelconque des revendications 1 à 3,
**caractérisé en ce que** l'étape de calcul (E2) consiste à déterminer comme position de sécurité (PS), une position écartée au moins latéralement par rapport à au moins une trajectoire anticipée (TA), suivie par l'aéronef meneur (AC1) lors d'une manoeuvre d'évitement et destinée à supprimer le risque de collision, dans laquelle position de sécurité (PS) l'aéronef suiveur (AC2) n'est pas soumis à des effets de vortex (V1, V2) générés par l'aéronef meneur (AC1).

5. Procédé selon la revendication 4,
**caractérisé en ce que** la première étape de calcul (E2) consiste à déterminer, comme position de sécurité (PS), une position qui est également écartée verticalement par rapport à la trajectoire anticipée (TA) de l'aéronef meneur (AC1).

6. Procédé selon l'une quelconque des revendications 1 à 5,
**caractérisé en ce que** l'étape de contrôle (3 consiste, en amenant l'aéronef suiveur (AC2) dans la position de sécurité (PS), à maintenir le vol en formation.

7. Procédé selon l'une quelconque des revendications 1 à 5,
**caractérisé en ce que** l'étape de contrôle (E3) consiste, en amenant l'aéronef suiveur (AC2) dans la position de sécurité (PS), à rompre le vol en formation.

8. Dispositif de contrôle de la trajectoire d'un aéronef, dit aéronef suiveur (AC2), par rapport à un aéronef dit aéronef meneur (AC1) qui le précède, en cas de risque de collision, lesdits aéronefs meneur et suiveur (AC1, AC2) réalisant un vol en formation (F), ledit dispositif (1) comportant, montées sur l'aéronef suiveur (AC2) :
- une unité de réception de données (2A, 2B) configurée pour recevoir au moins une information de risque de collision concernant l'aéronef meneur (AC1);
- une unité de calcul (3) configurée pour déterminer au moins une position dite de sécurité (PS) lors de la réception d'une information de risque de collision, ladite position de sécurité (PS) correspondant à une position, dans laquelle l'aéronef suiveur (AC2) n'est pas soumis à des effets de vortex (V1, V2) générés par l'aéronef meneur (AC1); et
- une unité de contrôle (5) configurée pour amener l'aéronef suiveur (AC2) dans ladite position de sécurité (PS), dès que l'unité de calcul (3) a déterminé ladite position de sécurité (PS), **caractérisé en ce que** ladite unité est configurée pour, antérieurement à la réception d'une information de risque de collision, maintenir l'aéronef suiveur (AC2) dans une position dite optimale, dans laquelle ledit aéronef volant en formation bénéficie d'effets d'au moins l'un des vortex (V1, V2) générés par l'aéronef meneur (AC1).

9. Dispositif selon la revendication 8,
**caractérisé en ce que** l'unité de réception de données (2A) est configurée pour recevoir une information de risque de collision issue d'un système anticollision (8) de l'aéronef meneur (AC1).

10. Dispositif selon l'une des revendications 8 et 9,
**caractérisé en ce que** l'unité de réception de données (2B) est configurée pour recevoir une information de risque de collision issue d'un système anticollision (12) de l'aéronef suiveur (AC2).

11. Dispositif selon la revendication 10,
**caractérisé en ce qu'**il comporte ledit système anticollision (12) de l'aéronef suiveur (AC2).

12. Aéronef comprenant un dispositif (1) de contrôle de trajectoire, selon l'une quelconque des revendications 8 à 11.
